# EUROPEAN PATENT SPECIFICATION

(11) **EP 4 371 698 B1**
(45) Date of publication and mention of the grant of the patent: **19.08.2026**
(21) Application number: 23204978.3
(22) Date of filing: 20.10.2023
(51) Int. Cl.: B23Q 1/01, B23Q 1/62, B23Q 39/02

(54) **LATERAL PROCESSING MACHINE AND LATERAL PROCESSING SYSTEM**
SEITENBEARBEITUNGSMASCHINE UND SEITENBEARBEITUNGSSYSTEM
MACHINE DE TRAITEMENT LATÉRAL ET SYSTÈME DE TRAITEMENT LATÉRAL

(30) Priority: 21.11.2022 JP 2022185557
(43) Date of publication of application: 22.05.2024
(73) Proprietor: Sugino Machine Limited, Namerikawa City, Toyama 936-8577 (JP)
(72) Inventor: HAREMAKI, Hiroki, Namerikawa City, Toyama, 9368577 (JP); OTANI, Hideyoshi, Namerikawa City, Toyama, 9368577 (JP); EGAWA, Ryo, Namerikawa City, Toyama, 9368577 (JP)
(74) Representative: Global IP Europe Patentanwaltskanzlei

(56) References cited:
- EP-A1- 3 498 420
- EP-B1- 2 965 862
- DE-A1- 3 704 952
- JP-A- 2002 079 431
- KR-A- 20130 037 464
- US-A- 5 564 483
- US-A1- 2018 085 879
- US-B1- 6 623 222

## Description

### BACKGROUND

### 1. Technical Field

The present invention relates to a lateral processing machine and a lateral processing system.

### 2. Description of the Background

A conventional horizontal drilling machine includes a box-shaped frame having a left wall, a right wall, an upper wall, a lower wall, and a rear wall; a slideway having both ends fixed to the left and right walls with fixed to the upper wall; a slideway having both ends fixed to the left and right walls with fixed to the lower wall; and a column having both ends fixed to the upper and lower slideways (Japanese Utility Model Application Publication S51-162397 A; hereinafter, Patent Literature 1).

JP 2002 079431 A discloses a flat plate processing machine that performs machining or the like on a flat plate-shaped work.

### BRIEF SUMMARY

In the horizontal drilling machine of Patent Literature 1, it is difficult to increase the parallelism between the X axis (left-right axis), the Y axis (vertical axis), and the Z axis (front-rear axis) and the workpiece.

An object of the present invention is to provide a lightweight lateral processing machine which is easy to increase the parallelism between the X axis, the Y axis, and the Z axis and the workpiece.

A first aspect of the present invention provides a lateral processing machine, including:
an upper beam and a lower beam extending in an X direction;
an upper X guide disposed on a rear surface of the upper beam, the upper X guide extending in the X direction;
a lower X guide disposed on a rear surface of the lower beam, the lower X guide extending in the X direction;
a first moving column extending in a Y direction orthogonal to the X direction, the first moving column including,
   a first connection block disposed on the upper X guide, the first connection block configured to move in the X direction,
   a second connection block disposed on the lower X guide, the second connection block configured to move in the X direction, and
   a first column portion connecting the first connection block and the second connection block;
a pair of first Y guides disposed on the first moving column, each of the first Y guide extending in the Y direction;
a first Y table disposed on the pair of the first Y guides, the first Y table configured to move in the Y direction; and
a first processing unit detachably attached to the first Y table, the first processing unit including,
   a first ram configured to move in a Z direction orthogonal to both the X direction and the Y direction, and
   a first spindle supported by the first ram.

The lateral processing machine may include,
a third X motor including a third X output shaft, the third X motor disposed on the third connection block;
a third X helical gear fastened to the third output shaft to mesh with the upper X helical rack;
a fourth X motor including a fourth output shaft, the fourth X motor disposed on the fourth connection block; and
a fourth X helical gear fastened to the fourth output shaft to mesh with the lower X helical rack.

The control device may synchronize a rotation of the third X output shaft with a rotation of fourth X output shaft.

The lateral processing machine may include,
a second Y helical rack disposed on the second moving column, the second Y helical rack extending in the Y direction;
a second Y motor including a second Y output shaft, the second Y motor disposed on the second Y table; and
a second Y helical gear fastened to the second Y output shaft to mesh with the second Y helical rack.

The lateral processing machine may include,
a fourth Y motor including a fourth Y output shaft, the fourth Y motor disposed on the fourth Y table; and
a fourth Y helical gear fastened to the fourth Y output shaft to mesh with the second Y helical rack.

The third Y table may be disposed on a first side of the first moving column. The third processing unit may be disposed on the first side of the first moving column. The fourth Y table may be disposed on a second side of the second moving column. The fourth processing unit may be disposed on the second side of the second moving column.

The first column portion may include a first main column, a first sub-column disposed on a second side of the first main column, and a first side-column connected to the first main column and disposed on a lateral side of the first main column in the Z direction. The first connection block connects the upper ends of the first main column and the first sub-column. The second connection block connects the lower ends of the first main column and the first sub-column. The pair of first Y guides are disposed on the main column and the side-column, respectively. The first Y helical rack is disposed on the first main column or the first side-column.

The first column portion is disposed below the upper beam and the first connection block. The width of the first column portion in the Z direction is substantially the same as the width of the upper beam and the first connection block in the Z direction.

The first column portion is disposed above the lower beam and the second connection block. The width of the first column portion in the Z direction is substantially the same as the width of the lower beam and the second connecting block in the Z direction.

The upper X guide and the upper X helical rack may be disposed on the rear surface of the upper beam when viewed from the distal end of the spindle. The first main column, the first sub-column, the first connection block, and the second connection block may be disposed on the rear surface of the upper beam when viewed from the distal end of the spindle. The lower X guide and the lower X helical rack may be disposed on the rear surface of the lower beam when viewed from the distal end of the spindle. The first main column, the first sub-column, the first connection block, and the second connection block may be disposed on the rear surface of the lower beam when viewed from the distal end of the spindle. The first side-column may be disposed below the upper beam.

The second column portion may include a second main column, a second sub-column disposed on a first side of the second main column, and a second side-column connected to the second main column and disposed on a lateral side of the second main column in the Z direction. The third connection block connects the upper ends of the second main column and the second sub-column. The fourth connection block connects the lower ends of the second main column and the second sub-column. The pair of the second Y guides are disposed on the second main column and the second side-column, respectively. The second Y helical rack is disposed on the second main column or the second side-column.

The second column portion is disposed below the upper beam and the third connection block. The width of the second column portion in the Z direction is substantially the same as the width of the upper beam and the third connection block in the Z direction.

The second column portion is disposed above the lower beam and the fourth connection block. The width of the second column portion in the Z direction is substantially the same as the width of the lower beam and the fourth connection block in the Z direction.

The lower X guide and the lower X helical rack may be disposed on the rear surface of the lower beam when viewed from the distal end of the spindle. The second main column, the second sub-column, the third connection block, and the fourth connection block may be disposed on the rear surface of the upper beam when viewed from the distal end of the spindle. The second main column, the second sub-column, the second connection block, the third connection block, and the fourth connection block may be disposed on the rear surface of the lower beam when viewed from the distal end of the spindle. The second side-column may be disposed below the upper beam.

The expansion cover is, for example, a bellows, a telescopic cover, or a roll up cover.

Hereinafter, the moving column and the Y guide, the Y table, the Y helical rack, the Y motor, the processing unit disposed on the moving column are referred to as a processing machine group. The processing machine group moves integrally in the X direction. One or more processing machine groups may be disposed. Three or more processing machine groups may be arranged.

The height of the opening may be substantially the same as the height of the first column or the second column. The height of the opening may be substantially the same as the height of the first Y guide or the second Y guide. The width of the opening may be substantially the same as the width of the first processing unit, the second processing unit, the third processing unit, the fourth processing unit, the first Y table, the second Y table, the third Y table, or the fourth Y table. The width of the opening may be substantially the same as the width of the first column or the second column. Here, substantially the same means that the members listed above are able to pass through when they are detached.

When the first moving column is moved so as to be exposed to the opening, the first processing unit or the first Y table may be exposed from the opening. At this time, the third processing unit and the third Y table may be exposed from the opening.

When the second moving column is moved so as to be exposed to the opening, the second processing unit and the second Y table may be exposed from the opening. At this time, the fourth processing unit and the fourth Y table may be exposed from the opening.

According to the lateral processing machine of the present invention, the parallelism between the X axis, the Y axis, and the Z axis and the workpiece is easily increased with reduced weight.

### BRIEF DESCRIPTION OF DRAWINGS

FIG. 1 is a lateral processing machine according to a first embodiment.
FIG. 2 shows a view of FIG. 1 as viewed along an arrow II.
FIG. 3 is an exploded view of the lateral processing machine according to the first embodiment.
FIG. 4 shows a view of FIG. 3 as viewed along an arrow IV.
FIG. 5 is a cross-sectional view taken along a V-V line in FIG. 4.
FIG. 6 is a cross-sectional view taken along a VI-VI line in FIG. 4.
FIG. 7 is a front view of a lateral processing machine according to a second embodiment.
FIG. 8 is a plan view of the lateral processing machine according to the second embodiment.
FIG. 9 is a lateral processing machine according to a third embodiment.

### DETAILED DESCRIPTION

### First Embodiment

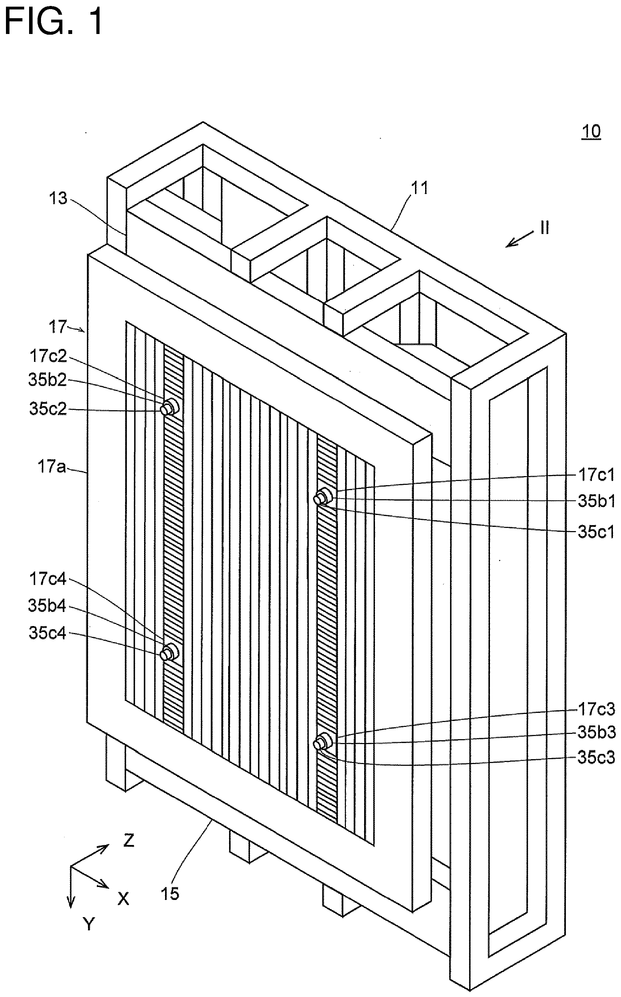

As shown in FIGs. 1 to 6, a lateral processing machine 10 according to the present embodiment includes a support frame 11, an upper beam 13, a lower beam 15, an upper X guide 211, a lower X guide 212, an upper X rack (an upper X helical rack) 231, a lower X rack (a lower X helical rack) 232, a first processing machine group 181, a second processing machine group 182, and a expansion cover 17.

Hereinafter, a +X direction in FIG. 1 is defined as right, and a -X direction is defined as left. A -Y direction is defined as up, and a +Y direction is defined as down. A -Z direction is defined as front, and a +Z direction is defined as rear.

The first processing machine group 181 includes a first column (first moving column) 191, a first X motor 241, a first X gear (X helical gear) 221, a second X motor 242, a second X gear (second X helical gear) 222, a first Y guide 271, a first Y table 251, a first Y rack (Y helical rack) 291, a first Y motor 301, a first Y gear (first Y helical gear) 281, a first processing unit 351, a third Y table 253, a third processing unit 353, and a third Y helical gear 283. The first processing unit 351 and the third processing unit 353 are disposed on the left side (first side) of the first column 191.

The second processing machine group 182 is substantially the same as the first processing machine group 181. The second processing machine group 182 is symmetrical to the first processing machine group 181 with respect to YZ plane. The second processing machine group 182 includes a second column (moving column) 192, a third X motor 243, a third X gear (third X helical gear) 223, a fourth X motor 244, a fourth X gear (fourth X helical gear) 224, a second Y guide 272, a second Y table 252, a second Y rack (second helical rack) 292, a second Y motor 302, a second Y gear (second helical gear) 282, a second processing unit 352, a fourth Y table 254, a fourth Y motor 304, a fourth Y helical gear 284, and a fourth processing unit 354. The second processing machine group 182 is disposed on the left side of the first processing machine group 181. The second processing unit 352 and the fourth processing unit 354 are disposed on the right side (second side) of the second column 192.

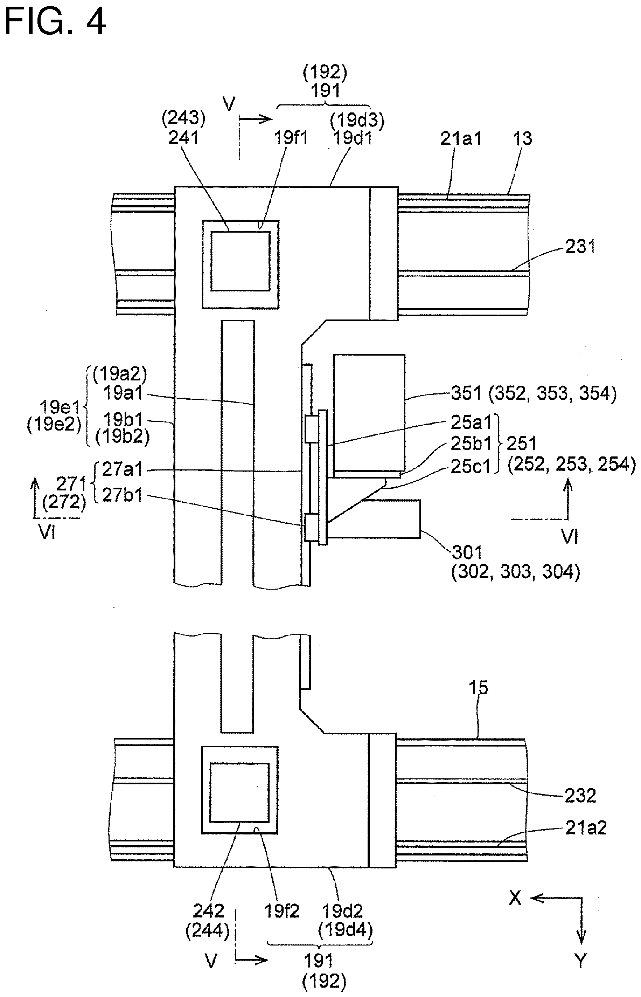

In FIG. 4 to FIG. 6, reference numerals of members having the same structure are also shown in parenthesis.

The first processing unit 351, the second processing unit 352, the third processing unit 353, and the fourth processing unit 354 are substantially the same. The first processing unit 351 includes a first case 35a1, a first ram 35b1, and a first spindle 35c1. The second processing unit 352 includes a second case 35a2, a second ram 35b2, and a second spindle 35c2. The third processing unit 353 includes a third case 35a3, a third ram 35b3, and a third spindle 35c3. The fourth processing unit 354 includes a fourth case 35a4, a fourth ram 35b4, and a fourth spindle 35c4.

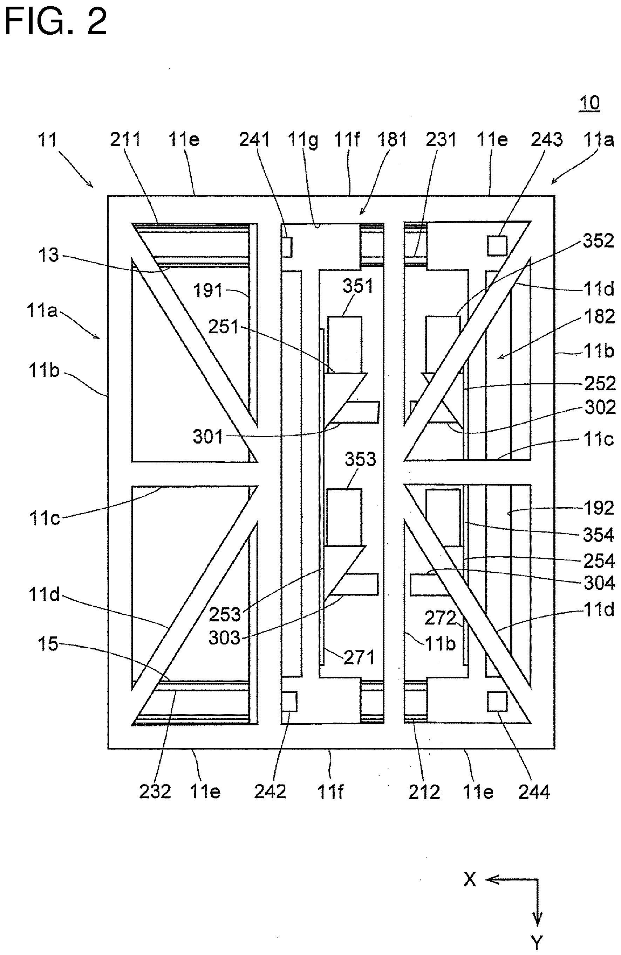

As shown in FIG. 2, the support frame 11 includes a pair of column groups 11a, a connecting beam 11f, and an opening 11g. The pair of column groups 11a are symmetrical with respect to YZ plane. The column groups 11a include a pair of columns 11b, a horizontal member 11c, an end beam 11e, and a diagonal member 11d. The support frame 11 has a truss structure. When viewed from the rear, the end beam 11e connects the upper and lower ends of the pair of column 11b. The horizontal member 11c extends in the lateral direction between the pair of columns 11b. A plurality of horizontal members 11c may be arranged. The diagonal member 11d connects diagonal connecting portions located at the end beam 11e, the horizontal member 11c, and the pair of columns 11b, respectively. The connecting beams 11f respectively connect the upper end and lower end of the pair of column group 11a connected by the truss structure.

The opening 11g is partitioned by the pair of column groups 11a and the connecting beam 11f. The horizontal member 11c and the diagonal member 11d are not disposed in the opening 11g. The opening 11g extends vertically. The height of the opening 11g is preferably as high as possible. For example, the opening 11g has substantially the same height as the first column 191 and the second column 192. The width of the opening 11g is substantially equal to the width of the first processing machine group 181 and the second processing machine group 182. Each member constituting the support frame 11 may be integrally formed.

The side surface, the upper surface, and the lower surface of the support frame 11 may have a rigid frame structure. In this case, the side surface, the upper surface, and the lower surface of the support frame 11 are preferably reinforced by ribs or plates so as to be difficult to deform.

The side surface, the upper surface, and the lower surface of the support frame 11 may have a truss structure.

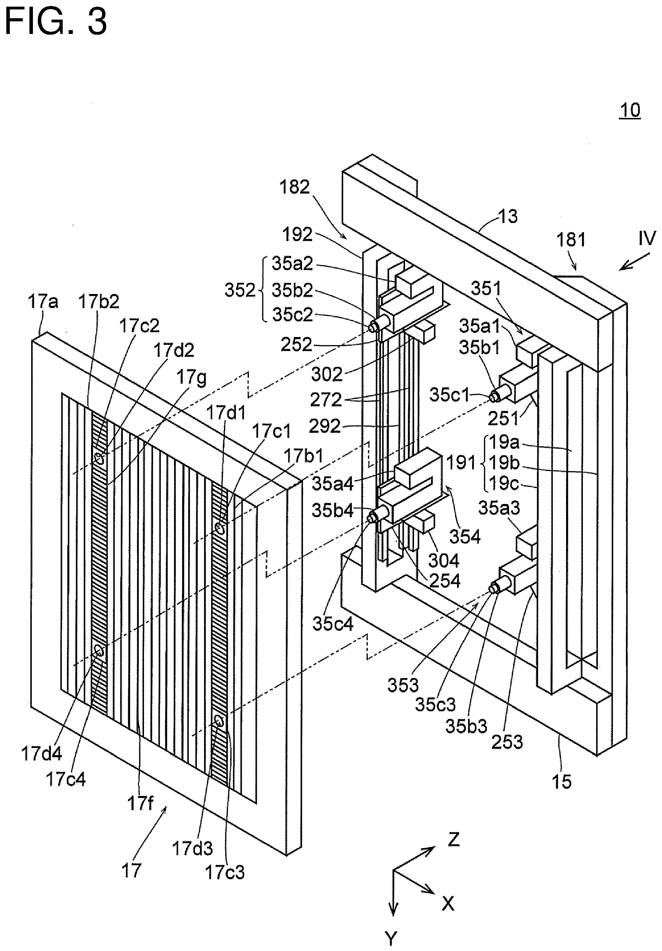

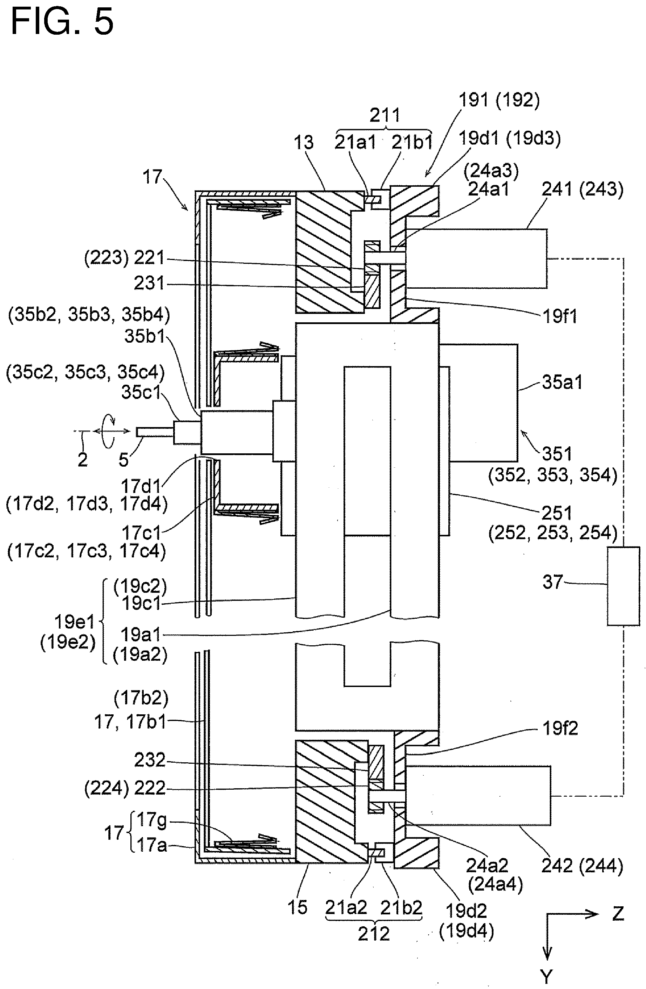

As shown in FIGs. 3 and 5, the bellows cover (expansion cover) 17 includes a bellows case (expansion cover case) 17a, a first X box 17b1, a second X box 17b2, a first Y box 17c1, a second Y box 17c2, a third Y box 17c3, a fourth Y box 17c4, an X bellows (X expansion cover) 17f, and a Y bellows (Y expansion cover) 17g.

The bellows case 17a has large openings on the front and back surfaces. The bellows case 17a is disposed in the support frame 11, the upper beam 13, and the lower beam 15.

The first X box 17b1 and the second X box 17b2, which are disposed in the bellows case 17a, extend in the Y direction. The first X box 17b1 and the second X box 17b2 move freely in the X direction.

The first Y box 17c1 and the third Y box 17c3 move freely in the Y direction in the first X box 17b1. The second Y box 17c2 and the fourth Y box 17c4 move freely in the Y direction in the second X box 17c2. The first to fourth Y boxes 17c1 to 17c4 have first to fourth ram through holes 17d1 to 17d4, respectively. The first to fourth ram 35b 1 to 35b4 pass through the first to fourth ram through holes 17d1 to 17d4, respectively.

The X bellows 17f is disposed between the bellows case 17a, the first X box 17b1, and the second X box 17b2. The X bellows 17f expands and contracts in the X direction.

The Y bellows 17g is disposed between the first X box 17b1, the first Y box 17c1, and the third Ybox 17c3. The Y bellows 17g expands and contracts in the Y direction. The Y bellows 17g is disposed between the second X box 17b2, the second Y box 17c2, and the fourth Y box 17c4. The Y bellows 17g expands and contracts in the Y direction.

As shown in FIGs. 1 and 3, the upper beam 13 is fixed to an upper end portion of the support frame 11. The upper beam 13 extends in the X direction. The upper beam 13 has a rectangular cross section elongated in the vertical direction.

The lower beam 15 is fixed to a lower end portion of the support frame 11. The lower beam 15 extends in the X direction. The lower beam 15 has a rectangular cross section elongated in the vertical direction. The upper beam 13 and the lower beam 15 are aligned at the same position in the front-rear direction.

As shown in FIGs. 4 and 5, the upper X guide 211 includes an X guide rail 21a1 and an X guide block 21b1. The X guide rail 21a1, which extends in the X direction, is fixed to the rear upper end portion of the upper beam 13. The X guide block 21b1 is guided in the X guide rail 21a1 to move in the X direction.

The lower X guide 212 includes an X guide rail 21a2 and an X guide block 21b2. The X guide rail 21a2, which extends in the X direction, is fixed to the rear lower end portion of the lower beam 15. The X guide block 21b2 is guided in the X guide rail 21a2 to move in the X direction.

As shown in FIGs. 4 to 6, the first column 191 includes a first column portion 19e1, a first connection block 19d1, and a second connection block 19d2. The first column portion 19e1 includes a first main column 19a1, a first sub-column 19b1, and a first side-column 19c1. The cross section of the first column portion 19e1 extends in the front-rear direction (Z direction).

The first main column 19a1, which has a rectangular cross-section, extends in the Y direction. The first sub-column 19b1 is disposed in the +X direction (right side) of the first main column 19a1. The first sub-column 19b1, which has a rectangular cross-section, extends in the Y direction.

The second column 192 includes a second column portion 19e2, a third connection block 19d3, and a fourth connection block 19d4. The second column portion 19e2 includes a second main column 19a2, a second sub-column 19b2, and a second side-column 19c2.

The first column 191 and the second column 192 have substantially the same structure.

The first connection block 19d1 connects the first main column 19a1 and the first sub-column 19b1 at the upper end of the first column 191. The first connection block 19d1, which has a rectangular cross-section, extends in the X direction. The first connection block 19d1 protrudes leftward from the first main column 19a1. The first connection block 19d1 has a first recess 19f1. The first recess

19f1 is disposed at a rear central portion of the first connection block 19d1. The first connection block 19d1 is fastened to the X guide block 21b1.

The second connection block 19d2 connects the first main column 19a1 and the first sub-column 19b1 at the lower end of the first column 191. The second connection block 19d2 has a second recess 19f2. The second connection block 19d2 is symmetrical to the first connection block 19d1 with respect to the ZX plane. The second connection block 19d2 is fastened to the X guide block 21b2.

As shown in FIG. 5, the first side-column 19c1 is disposed on the front side (-Z side) of the first main column 19a1. The upper and lower ends of the first side-column 19c1 are connected to the first main column 19a1. The first side-column 19c1 may be connected to the first main column 19a1 at a central portion in the height direction. A plate or a rib may be attached between the first side-column 19c1 and the first main column 19a1.

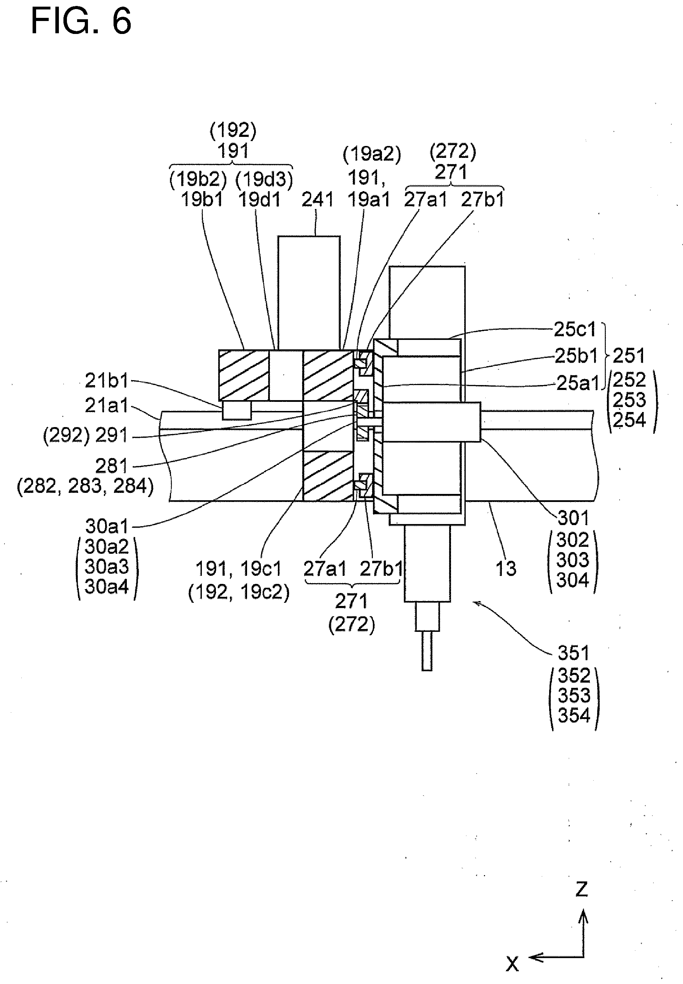

As shown in FIG. 6, the first column 191 is L-shaped when viewed from the Y direction. The first main column 19a1, the first sub-column 19b1, the first connection block 19d1, and the second connection block 19d2 are located behind the upper beam 13 and the lower beam 15. The first side column 19c1 is located below the upper beam 13 and above the lower beam 15. In other words, the first side column 19c1 protrudes forward from the first main column 19a1 so that the front surface of the first side-column 19c1 is substantially aligned with the front surface of the upper beam 13 and the lower beam 15.

As shown in FIGs. 4 and 5, the upper X rack 231 is disposed at the rear lower end of the upper beam 13. The upper X rack 231 extends in the X direction. The upper X rack 231 has tooth surfaces facing upward. The first X motor 241 includes a first X output shaft 24a1. The first X motor 241 is disposed in the first recess 19f1. The first X output shaft 24a1 protrudes to the front surface of the first connection block 19d1. The first X gear 221 is fastened to the first X output shaft 24a1 to mesh with the upper X rack 231.

The lower X rack 232 is disposed at the rear upper end of the lower beam 15. The lower X rack 232 extends in the X direction. The lower X rack 232 has tooth surfaces facing downward. The second X motor 242 includes a second X output shaft 24a2. The second X motor 242 is disposed in the second recess 19f2. The second X output shaft 24a2 protrudes to the front surface of the second connection block 19d2. The second X gear 222 is fastened to the second X output shaft 24a2 to mesh with the lower X rack 232.

The third X motor 243 includes a third X output shaft 24a3. The fourth X motor 244 includes a fourth X output shaft 24a4.

The second Y motor 302 includes a second Y output shaft 30a2. The third Y motor 303 includes a third Y output shaft 30a3. The fourth Y motor 304 includes a fourth Y output shaft 30a4.

The combination of the upper X rack 231, the first X gear 221, the first X motor 241, the lower X rack 232, the second X gear 222, and the second X motor 242 may be changed to a ball screw and servo motor mechanism or a linear motor. When a ball screw and servo motor mechanism is used, the ball screw may be a nut rotation type ball screw.

The upper X rack 231 may be a tapered rack. Here, the first X gear 221 and the second X gear 222 are tapered gears.

As shown in FIG. 6, each of the pair of first Y guides 271 includes a Y guide rail 27a1 and a Y guide block 27b1. The Y guide rail 27a1 is disposed on the left side surface of the first main column 19a1 and the left side of the first side-column 19c1, respectively. The pair of Y-guide rails 27a1 extends in the Y direction. The Y guide block 27b1 is guided in the Y guide rail 27a1 to move in the Y direction.

The first Y table 251 includes a base plate 25a1, a table plate 25b1, and a rib 25c1. The base plate 25a1, which extends in YZ plane, is fastened to the Y guide block 27b1. When viewed from the front, the table plate 25b1 extends horizontally leftward from the base plate 25a1. The rib 25c1 supports the table plate 25b1 from below.

The first Y rack 291 is disposed on the left side surface of the first main column 19a1. The first Y rack 291 extends in the Y direction. The first Y rack 291 has tooth surfaces facing forward and disposed between the first main column 19a1 and the first side-column 19c1.

The first Y motor 301 includes a first Y output shaft 30a1. The first Y motor 301 is disposed on the left side surface of the base plate 25a1. The first Y output shaft 30a1 protrudes rightward of the base plate 25a1. The first Y gear 281 is fastened to the first Y output shaft 30a1 to mesh with the first Y rack 291.

The third Y table 253, the third Y motor 303, and the third Y helical gear 283 are substantially the same as the first Y table 251, the first Y motor 301, and the first Y gear 281, respectively.

As shown in FIGs. 4 and 5, the first processing unit 351 is detachably disposed on the table plate 25b1. The first ram 35b1 moves forward and backward in the Z direction from the first case 35a1 along the first axis 2. The first spindle 35c1, which extends in the Z direction, is supported by the first ram 35b1. The cutting tool 5 is attached to the first spindle 35c1. The first ram 35b1, the first spindle 35c1, and the cutting tool 5 project forward from the bellows cover 17.

As shown in FIG. 5, the control device 37 synchronously controls the first X motor 241 and the second X motor 242 to move the first column 191 in the X direction while keeping the first column 191 along the Y direction. In addition, the control device 37 synchronously controls the third X motor 243 and the fourth X motor 244 to move the second column 192 in the X direction while keeping the second column 192 along the Y direction. The control device 37 controls the first to fourth Y motors 301 to 304 to move the first to fourth processing units 351 to 354 in the Y direction. The control device 37 controls the first to fourth processing units 351 to 354. Specifically, the control device 37 individually controls the feeding of the first to fourth ram 35b1 to 35b4 and the rotating of the first to fourth spindle 35c1 to 35c4. The control device 37 is a numerical control device.

According to the lateral processing machine 10 of the present embodiment, the first to fourth processing units 351 to 354 are moved by the moving columns 191 and 192. The first to fourth spindles 35c1 to 35c4 are fed by the first to fourth processing units 351 to 354. For example, when the lateral processing machine 10 performs drilling or tapping, the positions of the first to fourth processing units 351 to 354 are kept at the time of machining. If the feeding accuracy of the first to fourth processing units 351 to 354 is ensured, the drilling and tapping are performed with high accuracy. The accuracy of the holes and the taps themselves is guaranteed by the first to fourth processing units 351 to 354.

The lateral processing machine 10 of the present embodiment is lightweight even when the X stroke and the Y stroke are large. Further, as the Y tables 251 and 252 are arranged on one surface of the first column 191 and the second column 192, it is easy to install a plurality of processing units 351 to 354. In addition, it is easy to adjust the quantity of the column and the processing unit.

In the lateral processing machine 10 of the present embodiment, the upper X guide 211 is disposed on the rear surface of the upper beam 13. The position of the upper beam 13 is positioned by the cutting surface and the installation surface of the X guide rail 21a1 in the upper beam 13 is formed by cutting. The parallelism of the upper X guide 211 with the workpiece 3 is thus increased. The lower X guide 212 is also substantially identical to the upper X guide 211.

When the parallelism between the upper X guide 211, the lower X guide 212 and the workpiece 3 increases, the first column 191 and the second column 192 travel in parallel to the reference plane of the workpiece 3. In addition, the positions of the upper X guide 211 and the lower X guide 212 in the front-rear direction are easily aligned. The parallelism between the first column 191 and the vertical plane of the workpiece 3 is thus increased. In addition, the parallelism between the first Y guide 271 and the workpiece 3 is likely to be high. That is, the parallelism between XY plane and the workpiece 3 is likely to be high. The lateral processing machine 10 is thus suitable for milling as well as drilling and tapping.

The upper beam 13 and the lower beam 15 have a vertically elongated cross section. The bending stress in the vertical direction of the upper beam 13 and the lower beam 15 is thus reduced, and the front-rear width of the upper beam 13 and the lower beam 15 can be reduced.

Further, the first connection block 19d1 is disposed on the rear surface of the upper X guide 211. The second connection block 19d2 is disposed on the rear surface of the lower X guide 212. The first column portion 19e1, which extends frontward (-Z) direction, is disposed below the upper beam 13 and the first connection block 19d1, and above the lower beam 15 and the second connection block 19d2. This increases the distance between the set of first Y guides 271. This also increases the rigidity with respect to the processing reaction force in the thrust direction that is received when the first processing unit 351 performs processing. Thus, the front and rear widths of the upper beam 13, the lower beam 15, and the first column 191 can be reduced. The second column 192 and the second Y guide 272 are also substantially the same as the first column 191 and the first Y guide 271. This reduces the depth of the lateral processing machine 10 in the front-rear direction.

The extension of the first ram 35b1 of the first processing unit 351 is limited. When the first ram 35b1 is extended, the first ram 35b1 protrudes forward from the upper beam 13, the lower beam 15, and the first column 19. This defines the processable range of the first processing unit 351 in the Z direction. As the front-rear width of the upper beam 13, the lower beam 15, and the first column 191 can be reduced, the depth of the first Y table 251 can be reduced even when the front-rear length of the first processing unit 351 is short. The weight of the first Y table 251, the first processing unit 351, and the first Y motor 301 can thus be reduced. The second to fourth Y tables 252 to 254, the second to fourth processing units 352 to 354, and the second to fourth Y motors 302 to 304 are also substantially the same as the first Y table 251, the first processing unit 351, and the first Y motor 301, respectively.

The first column portion 19e1 includes a first main column 19a1, a first sub-column 19b1, and a first side-column 19c1. As the part where the processing reaction force is not applied is hollowed out, the weight of the first column portion 19e1 is reduced.

With the above-described structure, the inertia moment of the first processing machine group 181 is reduced. The size of the first X motor 241, the second X motor 242, the first Y motor 301, and the second Y motor 302 can thus be reduced. Further, the lateral processing machine 10 can be lightweight even when the X stroke length and the Y stroke length are increased.

In the present embodiment, the first processing unit 351 and the third processing unit 353 are disposed on the left side of the first column 191. The second column 192 is disposed on the left side of the first column 191. The second processing unit 352 and the fourth processing unit 354 are disposed on the right side of the second column 192. Thus, the first column 191 and the second column 192 are not disposed between the first and the third processing units 351, 353 and the second and the fourth processing units 352, 354. Thus, the first and the third processing units 351, 353 and the second and the fourth processing units 352, 354 can be brought close to each other. When the first to fourth processing units 351 to 354 simultaneously process the workpiece 3, the degree of freedom in processing order and processing time allocation is increased.

The lateral processing machine 10 of the present embodiment is moved in the X direction by a rack and pinion mechanism. The first column 191 and the second column 192 can thus move in the X direction across the full stroke.

In general, in a rack and pinion mechanism, a magnitude of a force applied to the pinion in a traveling direction and a backlash amount change periodically according to a position. Thus, it is difficult to adopt it to the feed shaft of the machine tool. In particular, it is not suitable to synchronously feed both ends of an elongated object by servo control.

In contrast, in the present embodiment, the upper X rack 231 and the lower X rack 232 are helical racks. The first X gear 221 and the second X gear 222 are helical gears. One or more teeth are thus engaged between the upper X rack 231 and the first X gear 221. Further, one or more teeth are engaged between the lower X rack 232 and the second X gear 222. This suppresses vibrations of the first X gear 221 and the second X gear 222. Even when the upper end and the lower end of the first column 191 are synchronously fed by servo driving, the first column 191 is smoothly controlled. This improves machining accuracy.

The vibration suppressing effect of the second column 192 is also substantially the same as that of the first column 191.

The lateral processing machine 10 of the present embodiment is moved in the Y direction by a rack and pinion mechanism. The first processing unit 351 and the third processing unit 353 can thus move in the Y direction across the full stroke. The second processing unit 352 and the fourth processing unit 354 are also substantially identical to the first processing unit 351 and the third processing unit 353.

The first Y rack 291 is a helical rack. The first Y gear 281 is a helical gear. Thus, one or more teeth engage between the first Y rack 291 and the first Y gear 281. This suppresses the vibration of the first Y gear 281. The first Y table 251 is thus smoothly controlled.

The 2nd to fourth Y tables 252 to 254 are substantially the same as the first Y table 251.

The support frame 11 has an opening 11g. For example, as shown in FIG. 2, when the first processing machine group 181 is moved in the X direction so as to overlap with the opening 11g, the operator can perform maintenance of the first processing machine group 181 through the opening 11g. Specifically, the operator can attach, detach and adjust the first processing unit 351, the third processing unit 353, the first Y table 251, the third Y table 253, the first Y guide 271, and the first Y rack 291. The second processing machine group 182 is substantially the same as the first processing machine group 181.

The first ram 35b1 and the third ram 35b3 move in the X direction while being aligned in the Y direction. This suppresses the inclination of the first X box 17b1. The second X box 17b2 is substantially the same as the first X box 17b1.

### Second Embodiment

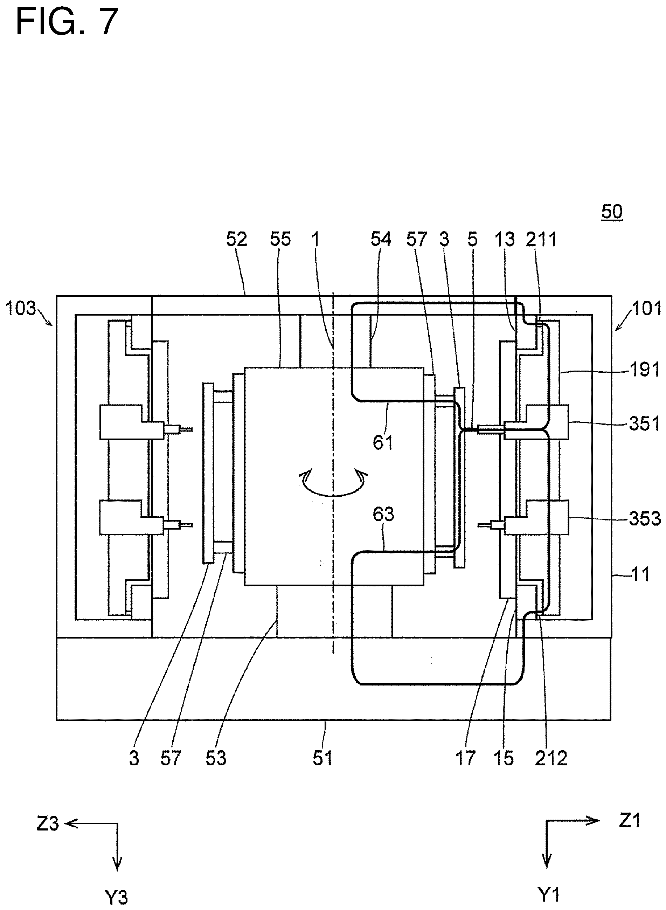

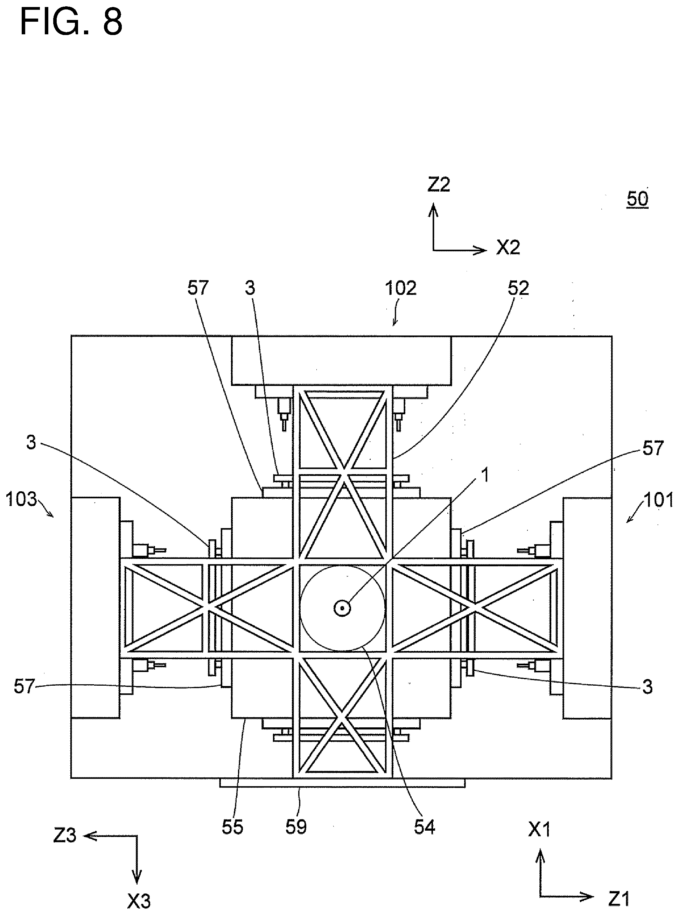

Next, a lateral processing system 50 of a second embodiment will be described. As shown in FIGs. 7 and 8, the lateral processing system 50 of the present embodiment includes a plurality of (three in the present embodiment) lateral processing machines 101 to 103, a bed 51, a turntable 53, an equerre 55, a support shaft 54, an upper coupling frame 52, a plurality of pallets 57, and a loading door 59.

The bed 51 supports the lateral processing machines 101 to 103. The bed 51 collects and discharges chips and machining coolant generated by machining.

The loading door 59 is arranged on the front of the lateral processing system 50 (downward in FIG. 8). The workpiece 3 is carried in from the loading door 59 by a robot or an operator to be attached to the pallet 57.

As shown in FIG. 8, the three lateral processing machines 101 to 103 are arranged around the rotation axis 1 at a center angle of 90 degrees. Each of the lateral processing machines 101 to 103 of the present embodiment is substantially the same as the lateral processing machine 10 of the first embodiment. The support frames 11 of the lateral processing machines 101 to 103 each has a lower end coupled to the bed 51.

The lateral processing machine 101 moves in three directions; an X1 axis, a Y1 axis, and a Z1 axis. The lateral processing machine 102 moves in three directions; an X2 axis, a Y2 axis (not shown), and a Z2 axis. The lateral processing machine 103 moves in three directions; an X3 axis, a Y3 axis, and a Z3 axis.

As shown in FIG. 7, the upper coupling frame 52 connects the upper ends of the support frames 11 of the plurality of lateral processing machines 101 to 103. The support shaft 54 is disposed on the upper coupling frame 52 around the rotation axis 1.

The turntable 53 is disposed on the bed 51 around the rotation axis 1.

As shown in FIGs. 7 and 8, the equerre 55 has a rectangular parallelepiped shape. The lower end of the equerre 55 is connected to the turntable 53. An upper end of the equerre 55 is supported by the support shaft 54. Both ends of the equerre 55 are rotatably supported by the turntable 53 and the support shaft 54. The plurality of pallets 57 are respectively fixed to the side surfaces of the equerre 55.

The turntable 53 rotates the equerre 55 about the rotation axis 1 by 90 degrees to position the pallet 57 in the direction of the lateral processing machines 101 to 103. Each of the lateral processing machines 101 to 103 processes the workpiece 3 installed on the corresponding pallet 57. The lateral processing machines 101 to 103 simultaneously process a plurality of workpieces 3. Each of the lateral processing machines 101 to 103 processes a different part of the workpiece 3, respectively. By rotating the turntable 53 four times after processing by the lateral processing machines 101 to 103, a large number of targets positions can be processed quickly at the same time.

As shown in FIG. 7, according to the lateral processing system 50 of the present embodiment, the upper coupling frame 52 and the equerre 55 are connected via the support shaft 54 at the upper end of the support frame 11. The bed 51, the turntable 53, and the equerre 55 are connected at the lower end of the support frame 11.

For example, when the workpiece 3 is processed by the first processing unit 351, the processing reaction force acts on the mechanical closed loop 61 composed of the first processing unit 351, the first column 191, the upper beam 13, the upper coupling frame 52, the support shaft 54, the equerre 55, the pallet 57, and the workpiece 3. At the same time, the processing reaction force acts on the mechanical closed loop 63 composed of the first processing unit 351, the first column 191, the lower beam 15, the bed 51, the turntable 53, the equerre 55, the pallet 57, and the workpiece 3. As the processing reaction force simultaneously acts on the upper closed loop 61 and the lower closed loop 63, the loop rigidity is increased. Further, as the processing reaction force simultaneously acts on the upper closed loop 61 and the lower closed loop 63, the parallelism and squareness of XY axis and the workpiece 3 of the lateral processing machine 101 are easily maintained.

### Third Embodiment

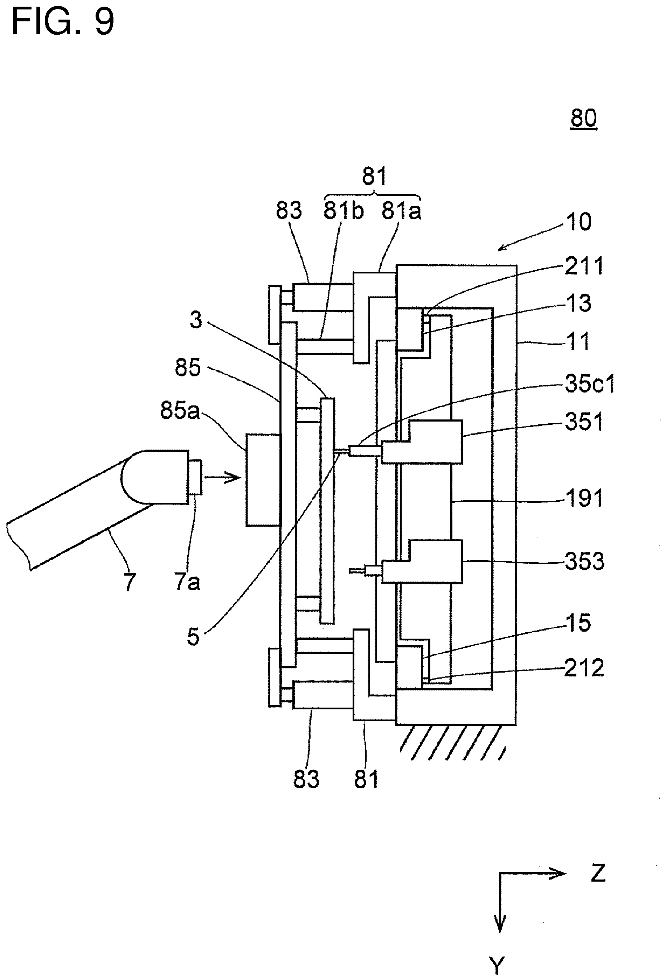

Next, a lateral processing system 80 of a third embodiment will be described. As shown in FIG. 9, the lateral processing system 80 of the present embodiment includes a lateral processing machine 10, a pallet support 81, a pallet clamp 83, and a pallet 85.

The lateral processing system 80 may include a robot 7. The robots 7 includes a connecting portion 7a. The robot 7 is, for example, a vertical articulated robot. The robot 7 carries the pallet 85 with the workpiece 3 into or out of the lateral processing system 80.

The pallet support 81 includes a bracket 81a and a stem 81b. The bracket 81a has, for example, an L-shape. The bracket 81a is fixed to the support frame 11. For example, the pallet support 81 is disposed at four corners of the front surface of the support frame 11. The stem 81b extends from the brackets 81a in Z direction toward the distal end of the first spindle 35c1.

The pallet clamp 83 is fixed to the bracket 81a. The pallet clamp 83 urges the pallet 85 toward the support frame 11.

The pallet 85 includes a connecting portion 85a. The pallet 85 holds the workpiece 3 on one surface of the pallet 85 (a surface facing the lateral processing machine 10). The connecting portion 85a is disposed on the other surface of the pallet 85. The connecting portion 85a is detachably connected to the connecting portion 7a. The pallet 85 is held between the stem 81b and the pallet clamp 83 to be fixed to the support frame 11.

As the lateral processing system 80 of the present embodiment makes the mechanical closed loop to be small, the loop rigidity can be increased. As shown in FIG. 9, for example, when the first processing unit 351 processes the workpiece 3, the processing reaction force acts on an upper mechanical closed loop (not shown) composed of the first processing unit 351, the first column 191, the upper beam 13, the pallet support 81, the pallet clamp 83, the pallet 85, and the workpiece 3. In addition, the processing reaction force acts on a lower mechanical closed loop (not shown) through the lower beam 15.

The robot 7 can attach the workpiece 3 directly to the support frame 11 together with the pallet 85. Thus, in the case where a plurality of lateral processing machines 10 are installed, the lateral processing machines 10 can be freely laid out. For example, the plurality of lateral processing machines 10 may be aligned in a straight line along the X direction. In this case, the robot 7 may be a traveling robot that travels in the X direction. In addition, two rows of lateral processing machines 10 may be symmetrically arranged with respect to the travel path of the robot 7.

### Reference Signs List

- 10: Lateral processing machine
- 13: Upper beam
- 15: Lower beam
- 211: Upper X guide
- 212: Lower X guide
- 191: First column (First moving column)
- 271: First Y Guide
- 251: First Y table
- 252: Second Y table
- 351: First processing unit
- 35b1: First ram
- 35c1: First spindle
- 352: Second processing unit
- 35b2: Second ram
- 35c2: Second spindle
- 50, 80: Lateral processing system

## Claims

1. A lateral processing machine (10), comprising:
an upper beam (13) and a lower beam (15) extending in an X direction;
an upper X guide (211) disposed on a rear surface of the upper beam (13), the upper X guide (211) extending in the X direction;
a lower X guide (212) disposed on a rear surface of the lower beam (15), the lower X guide (212) extending in the X direction;
a first moving column (191) extending in a Y direction orthogonal to the X direction, the first moving column (191) including,
a first connection block (19d1) disposed on the upper X guide (211), the first connection block (19d1) configured to move in the X direction,
a second connection block (19d2) disposed on the lower X guide (212), the second connection block (19d2) configured to move in the X direction, and
a first column portion (19e1) connecting the first connection block (19d1) and the second connection block (19d2);
wherein
the machine further comprises
a pair of first Y guides (271) disposed on the first moving column (191), each of the first Y guide (271) extending in the Y direction;
a first Y table (251) disposed on the pair of the first Y guides (271), the first Y table (251) configured to move in the Y direction; and
a first processing unit (351) detachably attached to the first Y table (251), the first processing unit (351) including,
a first ram (35b1) configured to move in a Z direction orthogonal to both the X direction and the Y direction, and
a first spindle (35c1) supported by the first ram (35b1).
wherein
the first column portion (19e1) has a cross-section extending in the Z direction, and
the pair of the first Y guides (271) are arranged in the Z direction,
the first column portion (19e1) is disposed below the upper beam (13) and the first connection block (19d1), and disposed above the lower beam (15) and the second connection block (19d2).

2. The lateral processing machine (10) according to claim 1 , further comprising:
a second moving column (192) extending in the Y direction, the second moving column (192) disposed on a first side from the first moving column (191) in the X direction, the second moving column (192) including,
a third connection block (19d3) disposed on the upper X guide (211), the third connection block (19d3) configured to move in the X direction,
a fourth connection block (19d4) disposed on the lower X guide (212), the fourth connection block (19d4) configured to move in the X direction, and
a second column portion (19e2) connecting the third connection block (19d3) and the fourth connection block (19d4);
a pair of second Y guides (272) disposed on a second side of the second moving column (192), the second side being opposite to the first side, each of the second Y guide (272) extending in the Y direction;
a second Y table (252) disposed on the pair of the second Y guides (272), the second Y table (252) configured to move in the Y direction; and
a second processing unit (352) detachably attached to the second side of the second Y table (252), the second processing unit (352) including,
a second ram (35b2) configured to move in the Z direction, and
a second spindle (35c2) supported by the second ram (35b2);
wherein the first processing unit (351) is disposed on the first side of the first moving column (191)
the second column portion (19e2) is disposed below the upper beam (13) and the third connection block (19d3), and disposed above the lower beam (15) and the fourth connection block (19d4).

3. The lateral processing machine (10) according to claim 1 or 2, wherein the first column portion (19e1) includes
a first main column (19a1),
a first sub-column (19b1) disposed on the second side of the first main column (19a1), and
a first side-column (19c1) connected to the first main column (19a1) and disposed on a lateral side of the first main column (19a1) in the Z direction,
the first connection block (19d1) connects upper ends of the first main column (19a1) and the first sub-column (19b1),
the second connection block (19d2) connects lower ends of the first main column (19a1) and the first sub-column (19b1), and
the pair of first Y guides (271) are disposed on the first main column (19a1) and the first side-column (19c1), respectively.

4. The lateral processing machine (10) according to claim 2 or claim 3 when depending on claim 2, wherein
the second column portion (19e2) includes
a second main column (19a2),
a second sub-column (19b2) disposed on the first side of the second main column (19a2), and
a second side-column (19c2) connected to the second main column (19a2) and disposed on a lateral side of the second main column (19a2) in the Z direction,
the third connection block (19d3) connects upper ends of the second main column (19a2) and the second sub-column (19b2),
the fourth connection block (19d4) connects lower ends of the second main column (19a2) and the second sub-column (19c2), and
the pair of the second Y guides (272) are disposed on the second main column (19a2) and the second side-column (19c2), respectively.

5. The lateral processing machine (10) according to any one of claims 1 to 4, further comprising:
a third Y table (253) disposed on the pair of the first Y guides (271), the third Y table (253) configured to move in the Y direction; and
a third processing unit (353) detachably attached to the third Y table (253), the third processing unit (353) including,
a third ram (35b3) configured to move in the Z direction, and
a third spindle (35c3) supported by the third ram (35b3).

6. The lateral processing machine (10) according to claim 2, further comprising:
a fourth Y table (254) disposed on the pair of the second Y guides (272), the fourth Y table (254) configured to move in the Y direction; and
a fourth processing unit (354) detachably attached to the fourth Y table (254), the fourth processing unit (354) including,
a fourth ram (35b4) configured to move in the Z direction, and
a fourth spindle (35c4) supported by the fourth ram (35b4).

7. The lateral processing machine (10) according to claim 5 or 6, further comprising:
a expansion cover case (17a) disposed on the upper beam (13) and the lower beam (15), the expansion cover case (17a) extending both in the X direction and in the Y direction;
a first X box (17b1) extending in the Y direction, the first X box (17b1) receiving the first ram (35b1) and the third ram (35b3) to pass through, the first X box (17b1) configured to move in the X direction inside the expansion cover case (17a);
a first Y box (17c1) receiving the first ram (35b 1) to pass through, the first Y box (17c1) configured to move in the Y direction inside the first X box (17b 1);
a plurality of first X expansion covers (17f) disposed between the expansion cover case (17a) and the first X box (17b1), the plurality of the first X expansion covers (17f) configured to expand and contract in the X direction; and
a plurality of first Y expansion covers (17g) disposed between an end of the first X box (17b1) and the first Y box (17c1), the plurality of the first Y expansion covers (17g) configured to expand and contract in the Y direction.

8. The lateral processing machine (10) according to claim 7, further comprising:
a second X box (17b2) extending in the Y direction, the second X box (17b2) receiving the second ram (35b2) and the fourth ram (35b4) to pass through, the second X box (17b2) configured to move in the X direction inside the expansion cover case (17a);
a second Y box (17c2) receiving the second ram (35b2) to pass through, the second Y box (17c2) configured to move in the Y direction inside the second X box (17b2); and
a plurality of second Y expansion covers (17g) disposed inside the second X box (17b2) between an end of the second X box (17b2) and the fourth Y box (17c4), the plurality of the second Y expansion covers (17g) configured to expand and contract in the Y direction;
wherein the plurality of the first X expansion covers (17f) are partially disposed between the expansion cover case (17a) and the second X box (17b2), and the plurality of the first X expansion covers (17f) are partially disposed between the first X box (17b1) and the second X box (17b2).

9. The lateral processing machine (10) according to claim 7 or 8, further comprising:
a third Y box (17c3) receiving the third ram (35b3) to pass through, the third Y box (17c3) configured to move in the Y direction inside the first X box (17b 1);
wherein the plurality of the first Y expansion covers (17g) are partially disposed between the first Y box (17c1) and the third Y box (17c3), and the plurality of the first Y expansion covers (17g) are partially disposed between an end of the first X box (17b1) and the third Y box (17c3).

10. The lateral processing machine (10) according to any one of claims 7 to 9, further comprising:
a fourth Y box (17c4) receiving the fourth ram (35b4) to pass through, the fourth Y box (17c4) configured to move in the Y direction inside the second X box (17b2);
wherein the plurality of the second Y expansion covers (17g) are partially disposed between the second Y box (17c2) and the fourth Y box (17c4), and the plurality of the second Y expansion covers (17g) are partially disposed between an end of the second X box (17b2) and the fourth Y box (17c4).

11. The lateral processing machine (10) according to any one of claims 1 to 10, further comprising:
a support frame (11) supporting the upper beam (13) and the lower beam (15), the support frame (11) having a truss structure, the support frame (11) having an opening (11g) extending in the vertical direction for the first processing unit (351) to be exposed.

12. The lateral processing machine (10) according to any one of claims 1 to 11, further comprising:
an upper X helical rack (231) disposed on the upper beam (13), the upper X helical rack (231) extending in the X direction;
a first X motor (241) including a first X output shaft (24a1), the first X motor (241) disposed on the first connection block (19d1);
a first X helical gear (221) fastened to the first X output shaft (24a1) to mesh with the upper X helical rack (231);
a lower X helical rack (232) disposed on the lower beam (15), the lower X helical rack (232) extending in the X direction;
a second X motor (242) including a second X output shaft (24a2), the second X motor (242) disposed on the second connection block (19d2);
a second X helical gear (222) fastened to the second X output shaft (24a2) to mesh with the lower X helical rack (232); and
a control device (37) configured to synchronize a rotation of the first X output shaft (24a1) with a rotation of the second X output shaft (24a2).

13. The lateral processing machine (10) according to claim 2 , further comprising:
a first Y helical rack (291) disposed on the first moving column (191), the first Y helical rack (291) extending in the Y direction;
a first Y motor (301) including a first Y output shaft (30a1), the first Y motor (301) disposed on the first Y table (251);
a first Y helical gear (281) fastened to the first Y output shaft (30a1) to mesh with the first Y helical rack (291);
a second Y motor (302) including a second Y output shaft (30a2), the second Y motor (302) disposed on the second Y table (252); and
a second Y helical gear (282) fastened to the first Y output shaft (30a1) to mesh with the first Y helical rack (291).

14. A lateral processing system (50), comprising:
the lateral processing machine (10) according to any one of claims 1 to 13; and
an equerre (55) to which a workpiece (3) is attached, the equerre (55) including,
an upper portion connected to the upper beam (13), and
a lower portion connected to the lower beam (15).

15. A lateral processing system (80), comprising:
the lateral processing machine (10) according to any one of claims 1 to 13;
a pallet (85) to which a workpiece (3) is attached; and
a pallet clamp (83) connected to the upper beam (13) and the lower beam (15);
wherein the pallet clamp (83) fixes the pallet (85) while the first processing unit (351) or the second processing unit (352) processes the workpiece (3).

## Patentansprüche

1. Lateralbearbeitungsmaschine (10), die aufweist:
einen oberen Träger (13) und einen unteren Träger (15), die sich in X-Richtung erstrecken;
eine obere X-Führung (211), die an einer Rückseite des oberen Trägers (13) angeordnet ist, wobei sich die obere X-Führung (211) in die X-Richtung erstreckt;
eine untere X-Führung (212), die an einer Rückseite des unteren Trägers (15) angeordnet ist, wobei sich die untere X-Führung (212) in die X-Richtung erstreckt;
eine erste bewegliche Säule (191), die sich in einer zur X-Richtung orthogonalen Y-Richtung erstreckt, wobei die erste bewegliche Säule (191) aufweist:
einen ersten Verbindungsblock (19d1), der an der oberen X-Führung (211) angeordnet ist, wobei der erste Verbindungsblock (19d1) konfiguriert ist, sich in der X-Richtung zu bewegen,
einen zweiten Verbindungsblock (19d2), der an der unteren X-Führung (212) angeordnet ist, wobei der zweite Verbindungsblock (19d2) konfiguriert ist, sich in der X-Richtung zu bewegen, und
einen ersten Säulenabschnitt (19e1), der den ersten Verbindungsblock (19d1) und den zweiten Verbindungsblock (19d2) verbindet;
wobei die Maschine ferner aufweist
ein Paar erster Y-Führungen (271), die an der ersten beweglichen Säule (191) angeordnet sind, wobei sich jede der ersten Y-Führungen (271) in der Y-Richtung erstreckt;
einen ersten Y-Tisch (251), der auf dem Paar der ersten Y-Führungen (271) angeordnet ist, wobei der erste Y-Tisch (251) konfiguriert ist, sich in der Y-Richtung zu bewegen; und
eine erste Bearbeitungseinheit (351), die abnehmbar an dem ersten Y-Tisch (251) angebracht ist, wobei die erste Bearbeitungseinheit (351) aufweist:
einen ersten Stößel (35b1), der konfiguriert ist, sich in einer Z-Richtung orthogonal sowohl zur X-Richtung als auch zur Y-Richtung zu bwegeb, und eine erste Spindel (35c1), die von dem ersten Stößel (35b1) gestützt wird.
wobei
der erste Säulenabschnitt (19e1) einen Querschnitt aufweist, der sich in der Z-Richtung erstreckt, und
das Paar der ersten Y-Führungen (271) in der Z-Richtung angeordnet ist,
der erste Säulenabschnitt (19e1) unter dem oberen Träger (13) und dem ersten Verbindungsblock (19d1) und über dem unteren Träger (15) und dem zweiten Verbindungsblock (19d2) angeordnet ist.

2. Lateralbearbeitungsmaschine (10) nach Anspruch 1, die ferner aufweist:
eine zweite bewegliche Säule (192), die sich in der Y-Richtung erstreckt, wobei die zweite bewegliche Säule (192) auf einer ersten Seite der ersten beweglichen Säule (191) in der X-Richtung angeordnet ist, wobei die zweite bewegliche Säule (192) aufweist:
einen dritten Verbindungsblock (19d3), der an der oberen X-Führung (211) angeordnet ist, wobei der dritte Verbindungsblock (19d3) konfiguriert ist, sich in der X-Richtung zu bewegen,
einen vierten Verbindungsblock (19d4), der an der unteren X-Führung (212) angeordnet ist, wobei der vierte Verbindungsblock (19d4) konfiguriert ist, sich in der X-Richtung zu bewegen, und
einen zweiten Säulenabschnitt (19e2), der den dritten Verbindungsblock (19d3) und den vierten Verbindungsblock (19d4) verbindet;
ein Paar zweiter Y-Führungen (272), die auf einer zweiten Seite der zweiten beweglichen Säule (192) angeordnet sind, wobei die zweite Seite der ersten Seite gegenüberliegt und sich jede der zweiten Y-Führungen (272) in Y-Richtung erstreckt;
einen zweiten Y-Tisch (252), der auf dem Paar der zweiten Y-Führungen (272) angeordnet ist, wobei der zweite Y-Tisch (252) konfiguriert ist, sich in der Y-Richtung zu bewegen; und
eine zweite Bearbeitungseinheit (352), die abnehmbar an der zweiten Seite des zweiten Y-Tisches (252) angebracht ist, wobei die zweite Bearbeitungseinheit (352) aufweist:
einen zweiten Stößel (35b2), der konfiguriert ist, sich in Z-Richtung zu bewegen, und
eine zweite Spindel (35c2), die von dem zweiten Stößel (35b2) gestützt wird;
wobei die erste Bearbeitungseinheit (351) auf der ersten Seite der ersten beweglichen Säule (191) angeordnet ist
der zweite Säulenabschnitt (19e2) unter dem oberen Träger (13) und dem dritten Verbindungsblock (19d3) und über dem unteren Träger (15) und dem vierten Verbindungsblock (19d4) angeordnet ist.

3. Lateralbearbeitungsmaschine (10) nach Anspruch 1 oder 2, wobei der erste Säulenabschnitt (19e1) aufweist:
eine erste Hauptsäule (19a1),
eine erste Nebensäule (19b1), die auf der zweiten Seite der ersten Hauptsäule (19a1) angeordnet ist, und
eine erste Seitensäule (19c1), die mit der ersten Hauptsäule (19a1) verbunden ist und in Z-Richtung an einer lateralen Seite der ersten Hauptsäule (19a1) angeordnet ist,
der erste Verbindungsblock (19d1) die oberen Enden der ersten Hauptsäule (19a1) und der ersten Nebensäule (19b1) verbindet,
der zweite Verbindungsblock (19d2) die unteren Enden der ersten Hauptsäule (19a1) und der ersten Nebensäule (19b1) verbindet, und
das Paar erster Y-Führungen (271) an der ersten Hauptsäule (19a1) bzw. der ersten Seitensäule (19c1) angeordnet ist.

4. Lateralbearbeitungsmaschine (10) nach Anspruch 2 oder Anspruch 3, wenn von Anspruch 2 abhängig, wobei
der zweite Säulenabschnitt (19e2) aufweist:
eine zweite Hauptsäule (19a2),
eine zweite Nebensäule (19b2), die an der ersten Seite der zweiten Hauptsäule (19a2) angeordnet ist, und
eine zweite Seitensäule (19c2), die mit der zweiten Hauptsäule (19a2) verbunden ist und in der Z-Richtung an einer lateralen Seite der zweiten Hauptsäule (19a2) angeordnet ist,
der dritte Verbindungsblock (19d3) die oberen Enden der zweiten Hauptsäule (19a2) und der zweiten Nebensäule (19b2) verbindet,
der vierte Verbindungsblock (19d4) die unteren Enden der zweiten Hauptsäule (19a2) und der zweiten Nebensäule (19c2) verbindet, und
das Paar der zweiten Y-Führungen (272) an der zweiten Hauptsäule (19a2) bzw. der zweiten Seitensäule (19c2) angeordnet ist.

5. Lateralbearbeitungsmaschine (10) nach einem der Ansprüche 1 bis 4, die ferner aufweist:
einen dritten Y-Tisch (253), der auf dem Paar der ersten Y-Führungen (271) angeordnet ist, wobei der dritte Y-Tisch (253) konfiguriert ist, sich in der Y-Richtung zu bewegen; und
eine dritte Bearbeitungseinheit (353), die abnehmbar an dem dritten Y-Tisch (253) angebracht ist, wobei die dritte Bearbeitungseinheit (353) aufweist,
einen dritten Stößel (35b3), der konfiguriert ist, sich in der Z-Richtung zu bewegen, und
eine dritte Spindel (35c3), die von dem dritten Stößel (35b3) gestützt wird.

6. Lateralbearbeitungsmaschine (10) nach Anspruch 2, die ferner aufweist:
einen vierten Y-Tisch (254), der auf dem Paar der zweiten Y-Führungen (272) angeordnet ist, wobei der vierte Y-Tisch (254) konfiguriert ist, sich in der Y-Richtung zu bewegen; und
eine vierte Bearbeitungseinheit (354), die abnehmbar an dem vierten Y-Tisch (254) angebracht ist, wobei die vierte Bearbeitungseinheit (354) aufweist:
einen vierten Stößel (35b4), der konfiguriert ist, sich in der Z-Richtung zu bewegen, und
eine vierte Spindel (35c4), die von dem vierten Stößel (35b4) gestützt wird.

7. Lateralbearbeitungsmaschine (10) nach Anspruch 5 oder 6, die ferner aufweist:
ein Ausdehnungsabdeckungsgehäuse (17a), das am oberen Träger (13) und am unteren Träger (15) angeordnet ist, wobei sich das Ausdehnungsabdeckungsgehäuse (17a) sowohl in der X-Richtung als auch in der Y-Richtung erstreckt;
einen ersten X-Kasten (17b1), der sich in der Y-Richtung erstreckt, wobei der erste X-Kasten (17b1) den ersten Stößel (35b1) und den dritten Stößel (35b3) zum Hindurchgehen aufnimmt und der erste X-Kasten (17b1) konfiguriert ist, sich in der X-Richtung innerhalb des Erweiterungsabdeckgehäuses (17a) zu bewegen;
einen ersten Y-Kasten (17c1), der den ersten Stößel (35b1) zum Hindurchgehen aufnimmt, wobei das erste Y-Kasten (17c1) konfiguriert ist, sich in der Y-Richtung innerhalb des ersten X-Kastens (17b1) zu bewegen;
mehrere erste X-Ausdehnungsabdeckungen (17f), die zwischen dem Ausdehnungsabdeckungsgehäuse (17a) und dem ersten X-Kasten (17b1) angeordnet sind, wobei die mehreren ersten X-Ausdehnungsabdeckungen (17f) konfiguriert sind, sich in der X-Richtung auszudehnen und zusammenzuziehen; und
mehrere erste Y-Ausdehnungsabdeckungen (17g), die zwischen einem Ende des ersten X-Kastens (17b1) und dem ersten Y-Kasten (17c1) angeordnet sind, wobei die mehreren ersten Y-Ausdehnungsabdeckungen (17g) konfiguriert sind, sich in der Y-Richtung auszudehnen und zusammenzuziehen.

8. Lateralbearbeitungsmaschine (10) nach Anspruch 7, die ferner aufweist:
einen zweiten X-Kasten (17b2), der sich in der Y-Richtung erstreckt, wobei der zweite X-Kasten (17b2) den zweiten Stößel (35b2) und den vierten Stößel (35b4) zum Hindurchgehen aufnimmt und der zweite X-Kasten (17b2) konfiguriert ist,
sich in der X-Richtung innerhalb des Dehnungsabdeckungsgehäuses (17a) zu bewegen;
einen zweiten Y-Kasten (17c2), der den zweiten Stößel (35b2) zum Hindurchgehen aufnimmt, wobei der zweite Y-Kasten (17c2) konfiguriert ist, sich in der Y-Richtung innerhalb des zweiten X-Kastens (17b2) zu bewegen; und
mehrere zweite Y-Ausdehnungsabdeckungen (17g), die innerhalb des zweiten X-Kastens (17b2) zwischen einem Ende des zweiten X-Kastens (17b2) und dem vierten Y-Kasten (17c4) angeordnet sind, wobei die mehreren zweiten Y-Ausdehnungsabdeckungen (17g) konfiguriert ist, sich in der Y-Richtung auszudehnen und zusammenzuziehen;
wobei die mehreren ersten X-Ausdehnungsabdeckungen (17f) teilweise zwischen dem Ausdehnungsabdeckungsgehäuse (17a) und dem zweiten X-Kasten (17b2) angeordnet sind und die mehreren ersten X-Ausdehnungsabdeckungen (17f) teilweise zwischen dem ersten X-Kasten (17b1) und dem zweiten X-Kasten (17b2) angeordnet sind.

9. Lateralbearbeitungsmaschine (10) nach Anspruch 7 oder 8, die ferner aufweist:
einen dritten Y-Kasten (17c3), der den dritten Stößel (35b3) zum Hindurchgehen aufnimmt, wobei der dritte Y-Kasten (17c3) konfiguriert ist, sich in der Y-Richtung innerhalb des ersten X-Kastens (17b1) zu bewegen;
wobei die mehreren ersten Y-Ausdehnungsabdeckungen (17g) teilweise zwischen dem ersten Y-Kasten (17c1) und dem dritten Y-Kasten (17c3) angeordnet sind und die mehreren ersten Y-Ausdehnungsabdeckungen (17g) teilweise zwischen einem Ende des ersten X-Kastens (17b1) und dem dritten Y-Kasten (17c3) angeordnet sind.

10. Lateralbearbeitungsmaschine (10) nach einem der Ansprüche 7 bis 9, die ferner aufweist:
einen vierten Y-Kasten (17c4), der den vierten Stößel (35b4) zum Hindurchgehen aufnimmt, wobei der vierte Y-Kasten (17c4) konfiguriert ist, sich in der Y-Richtung innerhalb des zweiten X-Kastens (17b2) zu bewegen;
wobei die mehreren zweiten Y-Ausdehnungsabdeckungen (17g) teilweise zwischen dem zweiten Y-Kasten (17c2) und dem vierten Y-Kasten (17c4) angeordnet sind und die mehreren zweiten Y-Ausdehnungsabdeckungen (17g) teilweise zwischen einem Ende des zweiten X-Kastens (17b2) und dem vierten Y-Kasten (17c4) angeordnet sind.

11. Lateralbearbeitungsmaschine (10) nach einem der Ansprüche 1 bis 10, die ferner aufweist:
einen Stützrahmen (11), der den oberen Träger (13) und den unteren Träger (15) stützt, wobei der Stützrahmen (11) eine Fachwerkstruktur aufweist, wobei der Stützrahmen (11) eine Öffnung (11g) aufweist, die sich in der vertikalen Richtung erstreckt, zum Freilegen der ersten Bearbeitungseinheit (351).

12. Lateralbearbeitungsmaschine (10) nach einem der Ansprüche 1 bis 11, die ferner aufweist:
eine obere X-Schrägzahnstange (231), die an dem oberen Träger (13) angeordnet ist, wobei sich die obere X-Schrägzahnstange (231) in der X-Richtung erstreckt;
einen ersten X-Motor (241), der eine erste X-Ausgangswelle (24a1) aufweist, wobei der erste X-Motor (241) am ersten Verbindungsblock (19d1) angeordnet ist;
ein erstes X-Schrägzahnrad (221), das an der ersten X-Ausgangswelle (24a1) befestigt ist, um in die obere X-Schrägzahnstange (231) einzugreifen;
eine untere X-Schrägzahnstange (232), die am unteren Träger (15) angeordnet ist, wobei sich die untere X-Schrägzahnstange (232) in der X-Richtung erstreckt;
einen zweiten X-Motor (242), der eine zweite X-Ausgangswelle (24a2) aufweist, wobei der zweite X-Motor (242) am zweiten Verbindungsblock (19d2) angeordnet ist;
ein zweites X-Schrägzahnrad (222), das an der zweiten X-Ausgangswelle (24a2) befestigt ist, um in die untere X- Schrägzahnstange (232) einzugreifen; und
eine Steuervorrichtung (37), die konfiguriert ist, eine Drehung der ersten X-Ausgangswelle (24a1) mit einer Drehung der zweiten X-Ausgangswelle (24a2) zu synchronisieren.

13. Lateralbearbeitungsmaschine (10) nach Anspruch 2, die ferner aufweist:
eine erste Y-Schrägzahnstange (291), die an der ersten beweglichen Säule (191) angeordnet ist, wobei sich die erste Y-Schrägzahnstange (291) in der Y-Richtung erstreckt;
einen ersten Y-Motor (301), der eine erste Y-Ausgangswelle (30a1) aufweist, wobei der erste Y-Motor (301) an dem ersten Y-Tisch (251) angeordnet ist;
ein erstes Y-Schrägzahnrad (281), das an der ersten Y-Ausgangswelle (30a1) befestigt ist, um in die erste Y-Schrägzahnstange (291 einzugreifen;
einen zweiten Y-Motor (302), der eine zweite Y-Ausgangswelle (30a2) aufweist, wobei der zweite Y-Motor (302) auf dem zweiten Y-Tisch (252) angeordnet ist; und
ein zweites Y-Schrägzahnrad (282), das an der ersten Y-Ausgangswelle (30a1) befestigt ist, um in die erste Y-Schrägzahnstange (291) einzugreifen.

14. Lateralbearbeitungssystem (50), das aufweist:
die Lateralbearbeitungsmaschine (10) nach einem der Ansprüche 1 bis 13; und
einen Winkel (55), an dem ein Werkstück (3) angebracht ist, wobei der Winkel (55) einen mit dem oberen Träger (13) verbundenen oberen Abschnitt und einen mit dem unteren Träger (15) verbundenen unteren Abschnitt aufweist.

15. Lateralbearbeitungssystem (80), das aufweist:
die Lateralbearbeitungsmaschine (10) nach einem der Ansprüche 1 bis 13;
eine Palette (85), an der ein Werkstück (3) angebracht ist; und
eine Palettenklemme (83), die mit dem oberen Träger (13) und dem unteren Träger (15) verbunden ist;
wobei die Palettenklemme (83) die Palette (85) fixiert, während die erste Bearbeitungseinheit (351) oder die zweite Bearbeitungseinheit (352) das Werkstück (3) bearbeitet.

## Revendications

1. Machine d'usinage latéral (10), comprenant :
une traverse supérieure (13) et une traverse inférieure (15) s'étendant dans une direction X ;
une glissière X supérieure (211) disposée sur une surface arrière de la traverse supérieure (13), ladite glissière X supérieure (211) s'étendant dans la direction X ;
une glissière X inférieure (212) disposée sur une surface arrière de la traverse inférieure (15), ladite glissière X inférieure (212) s'étendant dans la direction X ;
une première colonne mobile (191) s'étendant dans une direction Y orthogonale à la direction X, ladite première colonne mobile (191) comprenant :
un premier bloc de connexion (19d1) disposé sur la glissière X supérieure (211), ledit premier bloc de connexion (19d1) étant prévu pour se déplacer dans la direction X,
un deuxième bloc de connexion (19d2) disposé sur la glissière X inférieure (212), ledit deuxième bloc de connexion (19d2) étant prévu pour se déplacer dans la direction X, et
une première partie de colonne (19e1) reliant le premier bloc de connexion (19d1) au deuxième bloc de connexion (19d2) ;
où ladite machine comprend en outre :
une paire de premières glissières Y (271) disposées sur la première colonne mobile (191), chacune desdites premières glissières Y (271) s'étendant dans la direction Y ;
une première table Y (251) disposée sur la paire de premières glissières Y (271), ladite première table Y (251) étant prévue pour se déplacer dans la direction Y ; et
une première unité d'usinage (351) fixée de manière amovible à la première table Y (251), ladite première unité d'usinage (351) comprenant :
un premier coulisseau (35b1) prévu pour se déplacer dans une direction Z orthogonale à la fois à la direction X et à la direction Y, et
une première broche (35c1) supportée par le premier coulisseau (35b1). où
la première partie de colonne (19e1) présente une section transversale s'étendant dans la direction Z, et
la paire de premières glissières Y (271) est disposée dans la direction Z,
la première partie de colonne (19e1) est disposée en dessous de la traverse supérieure (13) et du premier bloc de connexion (19d1), et au-dessus de la traverse inférieure (15) et du deuxième bloc de connexion (19d2).

2. Machine d'usinage latéral (10) selon la revendication 1, comprenant en outre :
une deuxième colonne mobile (192) s'étendant dans la direction Y, ladite deuxième colonne mobile (192) étant disposée d'un premier côté par rapport à la première colonne mobile (191) dans la direction X, ladite deuxième colonne mobile (192) comprenant,
un troisième bloc de connexion (19d3) disposé sur la glissière X supérieure (211), ledit troisième bloc de connexion (19d3) étant prévu pour se déplacer dans la direction X,
un quatrième bloc de connexion (19d4) disposé sur la glissière X inférieure (212), ledit quatrième bloc de connexion (19d4) étant prévu pour se déplacer dans la direction X, et
une deuxième partie de colonne (19e2) reliant le troisième bloc de connexion (19d3) au quatrième bloc de connexion (19d4) ;
une paire de deuxièmes glissières Y (272) disposées sur un deuxième côté de la deuxième colonne mobile (192), ledit deuxième côté étant opposé au premier côté, chacune des deuxièmes glissières Y (272) s'étendant dans la direction Y ;
une deuxième table Y (252) disposée sur la paire de deuxièmes glissières Y (272), ladite deuxième table Y (252) étant prévue pour se déplacer dans la direction Y ; et
une deuxième unité d'usinage (352) fixée de manière amovible au deuxième côté de la deuxième table Y (252), ladite deuxième unité d'usinage (352) comprenant :
un deuxième coulisseau (35b2) prévu pour se déplacer dans la direction Z, et
une deuxième broche (35c2) supportée par le deuxième coulisseau (35b2) ;
où la première unité d'usinage (351) est disposée sur le premier côté de la première colonne mobile (191) ;
la deuxième partie de colonne (19e2) est disposée en dessous de la traverse supérieure (13) et du troisième bloc de connexion (19d3), et au-dessus de la traverse inférieure (15) et du quatrième bloc de connexion (19d4).

3. Machine d'usinage latéral (10) selon la revendication 1 ou la revendication 2, où la première partie de colonne (19e1) comprend :
une première colonne principale (19a1),
une première colonne secondaire (19b1) disposée sur le deuxième côté de la première colonne principale (19a1), et
une première colonne latérale (19c1) reliée à la première colonne principale (19a1) et disposée sur un côté latéral de la première colonne principale (19a1) dans la direction Z,
le premier bloc de connexion (19d1) relie les extrémités supérieures de la première colonne principale (19a1) et de la première colonne secondaire (19b1), le deuxième bloc de connexion (19d2) relie les extrémités inférieures de la première colonne principale (19a1) et de la première colonne secondaire (19b1), et
les glissières de la paire de premières glissières en Y (271) sont disposées respectivement sur la première colonne principale (19a1) et la première colonne latérale (19c1).

4. Machine d'usinage latéral (10) selon la revendication 2 ou la revendication 3 si dépendante de la revendication 2, où
la deuxième partie de colonne (19e2) comprend :
une deuxième colonne principale (19a2),
une deuxième colonne secondaire (19b2) disposée sur le premier côté de la deuxième colonne principale (19a2), et
une deuxième colonne latérale (19c2) reliée à la deuxième colonne principale (19a2) et disposée sur un côté latéral de la deuxième colonne principale (19a2) dans la direction Z,
le troisième bloc de connexion (19d3) relie les extrémités supérieures de la deuxième colonne principale (19a2) et de la deuxième colonne secondaire (19b2),
le quatrième bloc de connexion (19d4) relie les extrémités inférieures de la deuxième colonne principale (19a2) et de la deuxième colonne secondaire (19c2), et
les glissières de la paire de deuxièmes glissières en Y (272) sont disposées respectivement sur la deuxième colonne principale (19a2) et la deuxième colonne latérale (19c2).

5. Machine d'usinage latéral (10) selon l'une des revendications 1 à 4, comprenant en outre :
une troisième table Y (253) disposée sur la paire de premières glissières en Y (271), ladite troisième table Y (253) étant prévue pour se déplacer dans la direction Y ; et
une troisième unité d'usinage (353) fixée de manière amovible à la troisième table Y (253), ladite troisième unité d'usinage (353) comprenant :
un troisième coulisseau (35b3) prévu pour se déplacer dans la direction Z, et
une troisième broche (35c3) supportée par le troisième coulisseau (35b3).

6. Machine d'usinage latéral (10) selon la revendication 2, comprenant en outre :
une quatrième table Y (254) disposée sur la paire de deuxièmes glissières Y (272), ladite quatrième table Y (254) étant prévue pour se déplacer dans la direction Y ; et
une quatrième unité d'usinage (354) fixée de manière amovible à la quatrième table Y (254), ladite quatrième unité d'usinage (354) comprenant :
un quatrième coulisseau (35b4) prévu pour se déplacer dans la direction Z, et
une quatrième broche (35c4) supportée par le quatrième coulisseau (35b4).

7. Machine d'usinage latéral (10) selon la revendication 5 ou la revendication 6, comprenant en outre :
un cadre de couvertures extensibles (17a) disposé sur la traverse supérieure (13) et la traverse inférieure (15), ledit cadre de couvertures extensibles (17a) s'étendant à la fois dans la direction X et dans la direction Y ;
un premier boîtier X (17b1) s'étendant dans la direction Y, ledit premier boîtier X (17b1) recevant de manière traversante le premier coulisseau (35b1) et le troisième coulisseau (35b3), ledit premier boîtier X (17b1) étant prévu pour se déplacer dans la direction X à l'intérieur du cadre de couvertures extensibles (17a) ;
un premier boîtier Y (17c1) recevant de manière traversante le premier coulisseau (35b1), ledit premier boîtier Y (17c1) étant prévu pour se déplacer dans la direction Y à l'intérieur du premier boîtier X (17b1) ;
une pluralité de premières couvertures extensibles X (17f) disposées entre le cadre de couvertures extensibles (17a) et le premier boîtier X (17b1), ladite pluralité de premières couvertures extensibles X (17f) étant prévue pour s'étendre et se contracter dans la direction X ; et
une pluralité de premières couvertures extensibles Y (17g) disposées entre une extrémité du premier boîtier X (17b1) et le premier boîtier Y (17c1), ladite pluralité de premières couvertures extensibles Y (17g) étant prévue pour s'étendre et se contracter dans la direction Y.

8. Machine d'usinage latéral (10) selon la revendication 7, comprenant en outre :
un deuxième boîtier X (17b2) s'étendant dans la direction Y, ledit deuxième boîtier X (17b2) recevant de manière traversante le deuxième coulisseau (35b2) et le quatrième coulisseau (35b4), ledit deuxième boîtier X (17b2) étant prévu pour se déplacer dans la direction X à l'intérieur du cadre de couvertures extensibles (17a) ;
un deuxième boîtier Y (17c2) recevant de manière traversante le deuxième coulisseau (35b2), ledit deuxième boîtier Y (17c2) étant prévu pour se déplacer dans la direction Y à l'intérieur du deuxième boîtier X (17b2) ; et
une pluralité de deuxièmes couvertures extensibles Y (17g) disposées à l'intérieur du deuxième boîtier X (17b2) entre une extrémité du deuxième boîtier X (17b2) et le quatrième boîtier Y (17c4), ladite pluralité de deuxièmes couvertures extensibles Y (17g) étant prévue pour s'étendre et se contracter dans la direction Y ;
où la pluralité de premières couvertures extensibles X (17f) est partiellement disposée entre le cadre de couvertures extensibles (17a) et le deuxième boîtier X (17b2), et la pluralité de premières couvertures extensibles X (17f) est partiellement disposée entre le premier boîtier X (17b1) et le deuxième boîtier X (17b2).

9. Machine d'usinage latéral (10) selon la revendication 7 ou la revendication 8, comprenant en outre :
un troisième boîtier Y (17c3) recevant de manière traversante le troisième coulisseau (35b3), ledit troisième boîtier Y (17c3) étant prévu pour se déplacer dans la direction Y à l'intérieur du premier boîtier X (17b1) ;
où la pluralité de premières couvertures extensibles Y (17g) est partiellement disposée entre le premier boîtier Y (17c1) et le troisième boîtier Y (17c3), et la pluralité de premières couvertures extensibles Y (17g) est partiellement disposée entre une extrémité du premier boîtier X (17b1) et le troisième boîtier Y (17c3).

10. Machine d'usinage latéral (10) selon l'une des revendications 7 à 9, comprenant en outre :
un quatrième boîtier Y (17c4) recevant de manière traversante le quatrième coulisseau (35b4), ledit quatrième boîtier Y (17c4) étant prévu pour se déplacer dans la direction Y à l'intérieur du deuxième boîtier X (17b2) ;
où la pluralité de deuxièmes couvertures extensibles Y (17g) est partiellement disposée entre le deuxième boîtier Y (17c2) et le quatrième boîtier Y (17c4), et la pluralité de deuxièmes couvertures extensibles Y (17g) est partiellement disposée entre une extrémité du deuxième boîtier X (17b2) et le quatrième boîtier Y (17c4).

11. Machine d'usinage latéral (10) selon l'une des revendications 1 à 10, comprenant en outre :
un châssis de support (11) supportant la traverse supérieure (13) et la traverse inférieure (15), ledit châssis de support (11) présentant une structure en treillis,
ledit châssis de support (11) comportant une ouverture (11g) s'étendant dans la direction verticale pour permettre l'exposition de la première unité d'usinage (351).

12. Machine d'usinage latéral (10) selon l'une des revendications 1 à 11, comprenant en outre :
une crémaillère hélicoïdale X supérieure (231) disposée sur la traverse supérieure (13), ladite crémaillère hélicoïdale X supérieure (231) s'étendant dans la direction X ;
un premier moteur X (241) comprenant un premier arbre de sortie X (24a 1), ledit premier moteur X (241) étant disposé sur le premier bloc de connexion (19d 1) ;
un premier pignon hélicoïdal X (221) fixé au premier arbre de sortie X (24a1) de manière à s'engrener avec la crémaillère hélicoïdale supérieure X (231) ;
une crémaillère hélicoïdale X inférieure (232) disposée sur la traverse inférieure (15), ladite crémaillère hélicoïdale X inférieure (232) s'étendant dans la direction X ;
un deuxième moteur X (242) comprenant un deuxième arbre de sortie X (24a2), ledit deuxième moteur X (242) étant disposé sur le deuxième bloc de connexion (19d2) ;
un deuxième pignon hélicoïdal X (222) fixé au deuxième arbre de sortie X (24a2) de manière à s'engrener avec la crémaillère hélicoïdale X inférieure (232) ; et
un dispositif de commande (37) prévu pour synchroniser la rotation du premier arbre de sortie X (24a1) avec celle du deuxième arbre de sortie X (24a2).

13. Machine d'usinage latéral (10) selon la revendication 2, comprenant en outre :
une première crémaillère hélicoïdale Y (291) disposée sur la première colonne mobile (191), ladite première crémaillère hélicoïdale Y (291) s'étendant dans la direction Y ;
un premier moteur Y (301) comprenant un premier arbre de sortie Y (30a1), ledit premier moteur Y (301) étant disposé sur la première table Y (251) ;
un premier pignon hélicoïdal Y (281) fixé au premier arbre de sortie Y (30a1) de manière à s'engrener avec la première crémaillère hélicoïdale Y (291) ;
un deuxième moteur Y (302) comprenant un deuxième arbre de sortie Y (30a2), ledit deuxième moteur Y (302) étant disposé sur la deuxième table Y (252) ; et
un deuxième pignon hélicoïdal Y (282) fixé au premier arbre de sortie Y (30a1) de manière à s'engrener avec la première crémaillère hélicoïdale Y (291).

14. Système d'usinage latéral (50), comprenant :
la machine d'usinage latéral (10) selon l'une des revendications 1 à 13 ; et
une équerre (55) à laquelle est fixée une pièce à usiner (3), ladite équerre (55) comprenant :
une partie supérieure reliée à la traverse supérieure (13), et
une partie inférieure reliée à la traverse inférieure (15).

15. Système d'usinage latéral (80), comprenant :
la machine d'usinage latéral (10) selon l'une des revendications 1 à 13 ;
une palette (85) à laquelle est fixée une pièce à usiner (3) ; et
une bride de palette (83) reliée à la traverse supérieure (13) et à la traverse inférieure (15) ;
où ladite bride de palette (83) immobilise la palette (85) pendant que la première unité d'usinage (351) ou la deuxième unité d'usinage (352) usine la pièce (3).
